# EUROPEAN PATENT APPLICATION

(11) **EP 3 447 645 A1**
(43) Date of publication of application: **27.02.2019**
(21) Application number: 17187959.6
(22) Date of filing: 25.08.2017
(51) Int. Cl.: G06F 11/34, G06F 9/445, H04L 12/26, H04L 12/24, H04L 29/08, H04W 4/00

(54) **SMART PROVISIONING SOFTWARE APPLICATIONS ON EDGE DEVICES IN AN INTERNET-OF-THINGS ENVIRONMENT**

(71) Applicant: Siemens Aktiengesellschaft, 80333 München (DE)
(72) Inventor: Verma, Amit, 91058 Erlangen (DE)

(57) **Abstract**

The present invention relates to a method and system for provisioning software applications on edge devices (104A-N) in an Internet-of-Things (IoT) environment (100). In an embodiment, a method of provisioning a software application on the edge devices (104A-N) in the IoT environment (100) comprises detecting an event associated with provisioning a software application on at least one edge device (104A) communicatively coupled to an IoT cloud platform (102). The method comprises evaluating real-time resource capabilities of the edge device (104A) to execute the software application based on a resource requirement specification associated with the software application. Furthermore, the method comprises provisioning the software application on the edge device (104A) if the edge device (104A) has sufficient real-time resource capabilities to execute the software application.

## Description

The present invention generally relates to the field of Internet-of-Things, and more particularly relates to a method and system for provisioning software applications on edge devices in an Internet-of-Things (IoT) environment.

In an Internet-of-things (IoT) environment, such as Industrial IoT environment, a plurality of edge devices is connected to an IoT cloud platform and sensors and actuators via the Internet. The edge devices may be light weight, low cost devices which collect data from various sensors and actuators deployed in a plant, store and buffer the collected data, conduct analysis of the collected data, and perform an action (e.g., issuing a control command) based on the outcome of analysis. The edge devices may also be configured to aggregate, filter, selectively report, compress, encrypt, and/or otherwise pre-process the plant data, resulting in less data and/or value added data being communicated to the IoT cloud platform. This may lead to consumption of less network communication and backend storage and processing resources than may have been required or consumed absent such preprocessing. Typically, each of the edge devices may perform the above functions using one or more software applications deployed therein. The IoT cloud platform is responsible for managing the edge devices, managing the data (raw or preprocessed) received from the edge devices, and provisioning software applications on the edge devices.

Each of the edge devices in the IoT environment may vary in terms of hardware specification, and may have different real-time resource capabilities for executing new software applications provisioned by the IoT cloud platform. For example, the edge device which runs on Raspberry Pi^{™} may be capable of executing different software applications than the edge device based on typical industrial PC. Also, the real-time resource capabilities may vary based on number of software applications deployed on the edges device and resources utilized by the edge device in executing the software applications during run-time. A new software application deployed on an edge device having incompatible hardware and resource constraint may encounter performance issues (e.g., device up-time) during execution of the software application. Also, this may lead to erroneous analysis of the plant data.

In light of the above, there exists a need for an improved method and system for provisioning software applications on edge devices in an IoT environment.

Therefore, it is an object of the present invention to provide a method and system for smart provisioning software applications on edge devices in an IoT environment.

The object of the present invention is achieved by a method of smart provisioning a software application on the edge devices in the IoT environment. The method comprises detecting an event associated with provisioning a software application on at least one edge device communicatively coupled to an IoT cloud platform. The event can be a request for downloading the software application from the edge device. Also, the event can be initiation of a task to provision the software application on the edge devices. Alternatively, the event can be a request to provision the software application on the edge device from a user device. For example, the software application is an application for performing data analytics on the edge device. Alternatively, the software application can be any other application for performing a function on the edge device. The software application can be new application or upgrade patch.

The method further includes evaluating real-time resource capabilities of the edge device to execute the software application based on a resource requirement specification associated with the software application in response to the detected event. For example, the real-time resource capabilities indicate real-time resources available on the edge device for executing the software application. The real-time resource may include hardware as well as software resources. The real-time resources may include hardware capabilities and unutilized resources on the edge device. The resource requirement specification indicates minimal resources required for smooth execution of the software application on the edge device. Moreover, the method includes provisioning the software application on the edge device based on the evaluation of the real-time resource capabilities of the edge device.

In preferred embodiment, in evaluating the real-time resource capabilities of the edge device to execute the software application, the method may comprise obtaining the resource requirement specification associated with the software application from an application repository. For example, the application repository stores the software application and the associated resource requirement specification. The method may comprise obtaining real-time resource availability information associated with the edge device. Also, the method may comprise determining whether the real-time resources available on the edge device are equal to or greater than the minimum resources required for executing the software application on the edge device.

In one aspect of the preferred embodiment, in provisioning the software application on the edge device, the method may comprise provisioning the software application on the edge device if the real-time resources available on the edge device are equal to or greater than the minimum resources required for executing the software application on the edge device.

In another aspect of the preferred embodiment, if the real-time resources available on the edge device are less than the minimum resources required for executing the software application, the method may comprise customizing the software application to meet the real-time resources available on the edge device, and provisioning the customized software application on the edge device.

In yet another aspect of the preferred embodiment, if the real-time resources available on the edge device are less than the minimum resources required for executing the software application, the method may comprise determining whether one or more resources on the edge device can be freed-up for provisioning the software application, releasing the one or more resources on the edge device, and deploying the software application on the edge device.

The object of the present invention can also be achieved by a system for smart provisioning software applications on edge devices in an IoT environment. In an exemplary embodiment, the system may be an IoT cloud platform in a cloud infrastructure communicatively connected to edge devices in a plant. Alternatively, the system can be a remove server(s) communicatively coupled to the edge devices in the plant. The system comprises one or more processors, and a memory unit coupled to the processors, an edge device management module, and a provisioning module. The memory unit comprises an application repository having software applications stored therein.

The edge device management module is configured for detecting an event associated with provisioning a software application on at least one edge device, and evaluating real-time resource capabilities of the edge device to execute the software application based on a resource requirement specification associated with the software application in response to the detected event. The provisioning module is configured for provisioning the software application from the application repository on the edge device based on the outcome of evaluation of the real-time resource capabilities of the edge device.

In a preferred embodiment, in evaluating real-time resource capabilities of the edge device, the edge device management module may be configured for obtaining the resource requirement specification associated with the software application from the application repository, and obtaining real-time resource availability information associated with the edge device. The edge device management module may be configured for determining whether the real-time resources available on the edge device are equal to or greater than the minimum resources required for executing the software application on the edge device.

In the preferred embodiment, if the real-time resources available on the edge device are equal to or greater than the minimum resources required for executing the software application on the edge device, the provisioning module may be configured for provisioning the software application on the edge device.

In the preferred embodiment, if the real-time resources available on the edge device are less than the minimum resources required for executing the software application on the edge device, the provisioning module may be configured for customizing the software application to meet the real-time resources capabilities on the edge device, and provisioning the customized software application on the edge device.

Also, the object of the present invention can be achieved by an edge device in an IoT environment. The edge device comprises an edge operating system, and an edge device management module. The edge device management module is configured for receiving a request to evaluate real-time resource capabilities for executing a software application from an IoT cloud platform. The request comprises a resource requirement specification associated with the software application. The edge device management module is configured for evaluating real-time resource capabilities to execute the software application based on the resource requirement specification associated with the software application, and transmitting results of evaluation of the real-time resource capabilities to execute the software application to the IoT cloud platform. The edge device management module is configured for receiving the software application from the IoT cloud platform if the outcome of the evaluation indicates availability of sufficient real-time resource capabilities to execute the software application. Moreover, the edge device management module is configured for installing the software application received from the IoT cloud platform.

In a preferred embodiment, in evaluating real-time resource capabilities, the edge device management module may be configured for computing real-time resources available for executing the software application, and determining whether the real-time resources available for executing the software application are equal to or greater than the minimum resources required for executing the software application.

In the preferred embodiment, if the real-time resources available for executing the software application are less than the minimum resources required for executing the software application, the edge device management module may be configured for determining whether one or more resources can be freed-up for executing the software application, and releasing the one or more resources in order to ensure that the sufficient real-time resources are available for executing the software application.

The object of the present invention is achieved by a computer-program product, having machine-readable instructions stored therein, that when executed by a processor, cause the processor to perform method steps described above. The processor can be a processor of an IoT cloud platform or a processor of an edge device.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of an Internet-of-Things (IoT) environment, according to a first em bodiment of the present invention;
- FIG 2: is a block diagram of an IoT cloud platform as shown in FIG 1, according to the first embodiment of the present invention.
- FIG 3: is a flow diagram illustrating an exemplary method of smart provisioning a software application on an edge device by the IoT cloud platform, according to the first embodiment of the present invention;
- FIG 4: is a flow diagram illustrating another exemplary method of smart provisioning the software application on the edge device by the IoT cloud platform, according to the first embodiment of the present invention;
- FIG 5: is a schematic representation of an IoT environment, according to a second embodiment of the pre sent invention;
- FIG 6: is a block diagram of an exemplary edge device as shown in FIG 5, according to the second embodiment of the present invention;
- FIG 7: is a flow diagram illustrating an exemplary method of smart provisioning the software application on the edge device by the IoT cloud platform, according to the second embodiment of the present invention;
- FIG 8: is a process flowchart illustrating another exemplary method of computing real-time resources available for executing the software application on the edge device prior to provisioning the application, according to the second embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

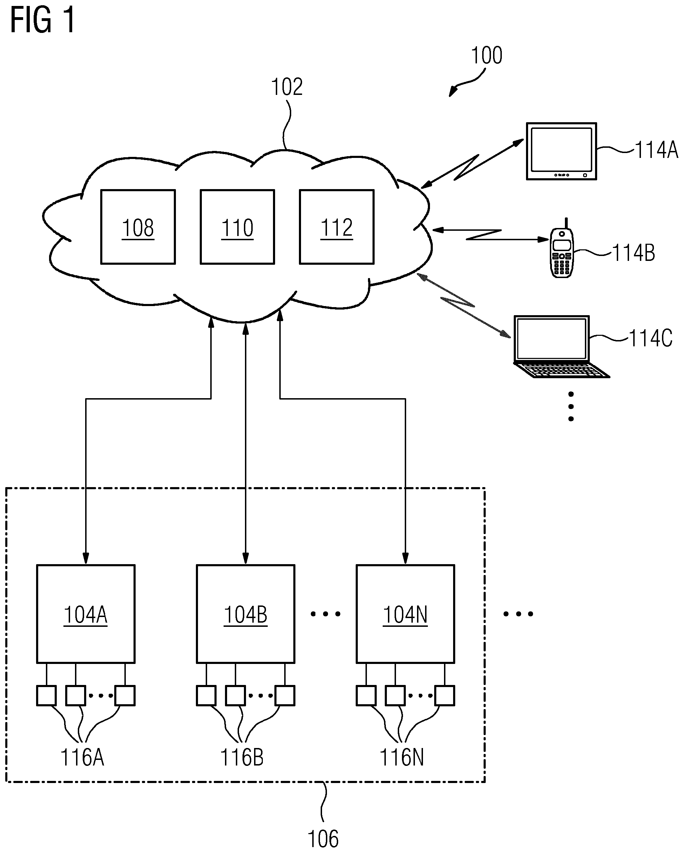

FIG 1 is a schematic representation of an Internet-of-Things (IoT) environment 100, according to a first embodiment of the present invention. The internet-of-things (IoT) environment 100 comprises an IoT cloud platform 102, a plant 106 comprising edge devices 104A-N and groups of sensors/actuators 116AN, and user devices 114A-C. Each group of sensors/actuators 116A-N is connected to respective edge devices 104A-N via wired network or wireless network. Each of the edge devices 104A-N are connected to the IoT cloud platform 102 via a network connection such as wide area network. The user devices 114A-C are connected to the IoT cloud platform 102 via the wide area network.

Although not shown, some or all of the edge devices 104A-N can be connected to the IoT cloud platform 102 via an edge gateway. Also, the IoT cloud platform 102 can be connected to edge devices in plants 106 located in different geographical locations.

In the plant 106, the groups of sensors/actuators 116A-N are deployed for monitoring and controlling equipments and processes. The edge devices 104A-N may be battery-powered devices and equipped with an edge operating system. For example, the edge devices 104A-N are configured for collecting plant data from the respective groups of sensors 116A-N, and analyzing the collected plant data using a set of software applications deployed on the edge devices 104A-N. The edge devices 104A-N may send commands to the respective actuators based on outcome of analysis of the collected plant data. The edge devices 104A-N may be also push the raw/processed plant data and/or results of analysis of the plant data to the IoT cloud platform 102.

The IoT cloud platform 102 can be a cloud infrastructure capable of providing cloud-based services such as smart provisioning of software applications on the edge devices 104A-N. The IoT cloud platform 102 can be part of public cloud or a private cloud. The IoT cloud platform 102 may enable data scientists/software vendors to provide software application as a service, thereby eliminating need for software maintenance, upgrading, and backup by the users. The software application can be complete application, or software patch. In some embodiments, the software application may be an analytical application for performing data analytics on the edge devices 104A-N. For example, the software application may include an application for down-sampling of time series data, filtering time series data based on thresholds or moving averages, performing Fast-Fourier transform on vibration data and filtering frequencies which indicate anomaly, performing liner regression and trend prediction, local classification using support vector machine classifiers, neural network or deep learning classifiers, performing stream analytics, etc.

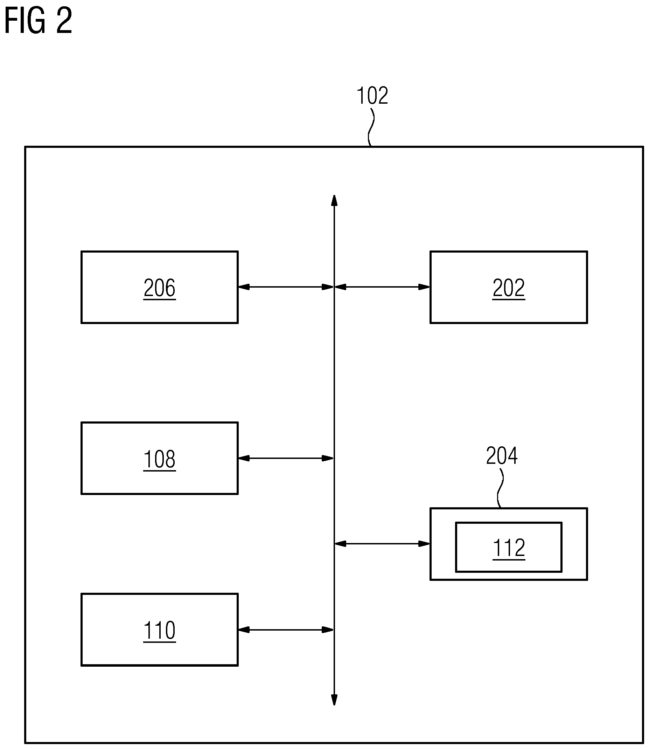

The IoT cloud platform 102 is further illustrated in greater detail in FIG 2. Referring to FIG 2, the IoT cloud platform 102 comprises a provisioning module 108, an edge device management module 110, a processor(s) 202, a memory unit 204, and a communication interface 206. The edge device management module 110 and the provisioning module 108 may take a form of hardware such as a processor with embedded software, or a computer program in the form machine-readable instructions stored on a computer program product (e.g., the memory unit 204) and executable by the processor(s) 202. The processor(s) 102 may be one or more processing units (e.g., servers) capable of processing requests from the edge devices 104A-N and the user devices 114A-C. The processor(s) 102 is also capable of executing machine-readable instructions stored on a computer-readable storage medium such as the memory unit 204 for performing various functions such as processing plant data, analyzing plant data, providing visualization of the analyzed plant data, issuing control commands to the actuators, managing the edge devices 104A-N and so on. The memory unit 204 can be volatile or non-volatile memory. In the preferred embodiment, the memory unit 204 is configured to store an application repository 112. The application repository 112 is capable of storing software applications for provisioning on the edge devices 104A-N. The software applications are stored in the application repository 112 as application binaries along with associated resource requirement specification in a configuration file. The communication interface 206 is configured to maintain a communication channel between the edge devices 104A-N and the IoT cloud platform 102. Also, the communication interface 206 is configured to maintain a communication channel between the IoT cloud platform 102 and the user devices 114A-C.

The edge device management module 110 is configured for evaluating real-time resource capabilities of the edge devices 104A-N to execute a software application based on a resource requirement specification associated with the software application. For example, the resources can be hardware as well as software resources. For example, the resource can be network resources, storage resources, computational resources, etc. The resource requirement specification indicates minimum resources required to execute the software application on the edge devices 104A-N. The provisioning module 108 is configured for provisioning the software application on one or more edge devices 104A-N if the one or more edge devices 104A-N has sufficient real-time resource capabilities to execute the software application. The steps performed by the IoT cloud platform 102 to provision the software applications on the edge devices 104-N is explained in greater detail in following description.

The user devices 114A-C may be cloud-aware device such as laptop, desktop, tablet computer, smart phone and the like devices. The user devices 114A-C are configured for accessing the IoT cloud platform 102 using a cloud user interface via the Internet. In one embodiment, the user devices 114A-C are configured for viewing the raw/processed plant data and/or results of analysis of the plant data via the cloud user interface. In another embodiment, the user devices 114A-C are configured for uploading software applications to be provisioned on the edge devices 104A-N in the application repository 112. For example, the software applications are typically created by data scientists or software vendors for targeted use cases and uploaded on the IoT cloud platform 102 for provisioning on the edge devices 104A-N. In yet another embodiment, the user devices 114A-C are configured for triggering a request to provision a desired software application on one of the edge devices 104A-N in the plant 106. In still another embodiment, the user devices 114A-C may act as a portable human-machine interface device for issuing commands to the actuators 116A-N via the edge devices 104A-N based on the results of the analysis of the plant data.

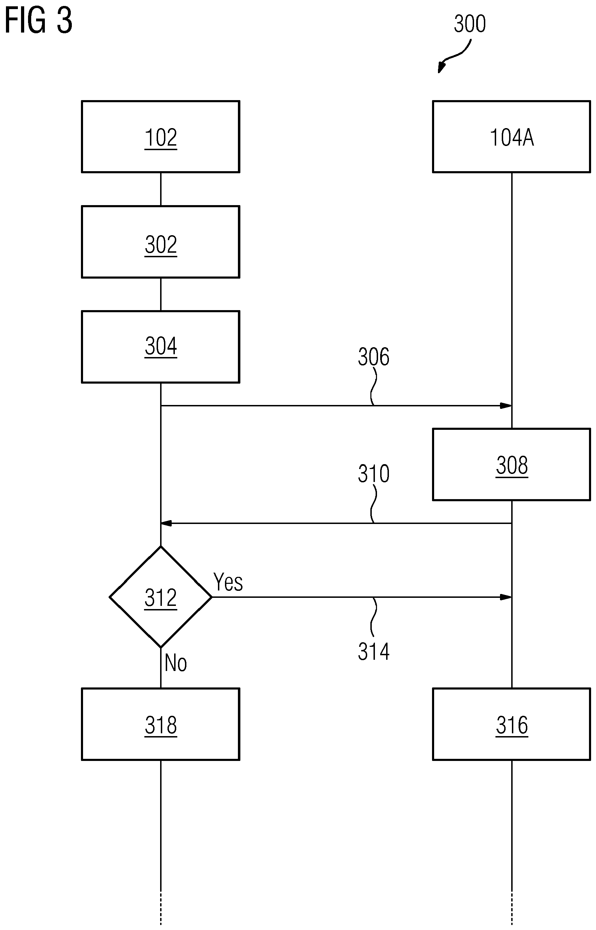

FIG 3 is a flow diagram 300 illustrating an exemplary method of smart provisioning a software application on the edge device 104A by the IoT cloud platform 102, according to the first embodiment of the present invention. At step 302, the IoT cloud platform 102 detects an event associated with provisioning a software application on the edge device 104A. In one embodiment, the IoT cloud platform 102 detects occurrence of the event when a request for provisioning the software application is received from the edge device 104A. In another embodiment, the IoT cloud platform 102 detects occurrence of the event when a task to deploy the software application is triggered by a scheduling algorithm. In yet another embodiment, the IoT cloud platform 102 detects occurrence of the event when a request to provision the software application is received from one of the user devices 114A-C.

At step 304, the IoT cloud platform 102 obtains a resource requirement specification associated with the software application from the application repository 112. The resource requirement specification indicates minimum resources required for smooth execution the software application on the edge devices in real-time. The resources that the software application might require for smooth execution may include hardware and/or software resources including but not limited to Random access memory, processor cycles, persistent storage on disk, processor type or instruction set, graphical processing unit, tensor processing unit, data throughput, etc.

At step 306, the IoT cloud platform 102 sends a request to provide real-time resource availability information to the edge device 104A. At step 308, the edge device 104A computes real-time resources available for executing the software application. At step 310, the edge device 104A sends the real-time resource availability information to the IoT cloud platform 102 via the Internet based on the computed real-time resources. At step 312, the IoT cloud platform 102 determines whether the real-time resources available on the edge device 104A are equal to or greater than the minimum resources required for executing the software application on the edge device 104A.

If the real-time resources available are equal to or greater than the minimum resources required, then at step 314, the IoT cloud platform 102 provisions the software application on the edge device 104A. In an exemplary implementation, the IoT cloud platform 102 obtains application binary associated with the software application from the application repository 112 and pushes the application binary to the edge device 104A via the Internet. At step 318, the edge device 104A deploys the application binary received from the IoT cloud platform 102. If the real-time resources available are less than the minimum resources required, then at step 318, the IoT cloud platform 102 generates an error notification indicating that the software application cannot be provisioned on the edge device 104A due to unavailability of sufficient resources on the edge device 104A for executing the software application.

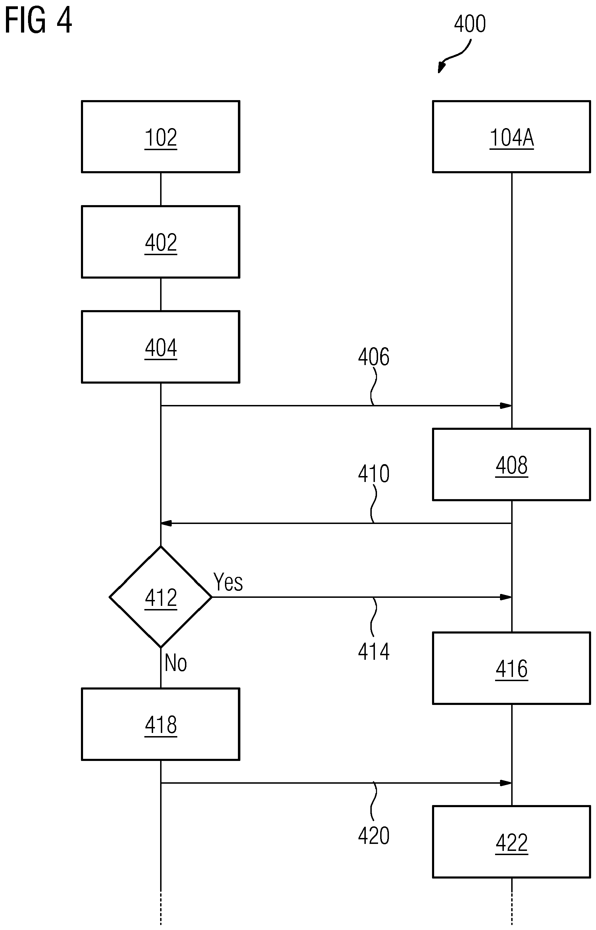

FIG 4 is a flow diagram 400 illustrating another exemplary method of smart provisioning a software application on the edge device 104A by the IoT cloud platform 102, according to the first embodiment of the present invention. At step 402, the IoT cloud platform 102 detects an event associated with provisioning a software application on the edge device 104A. At step 404, the IoT cloud platform 102 obtains a resource requirement specification associated with the software application from the application repository 112. At step 406, the IoT cloud platform 102 sends a request to provide real-time resource availability information to the edge device 104A.

At step 408, the edge device 104A computes real-time resources available for executing the software application. At step 410, the edge device 104A sends the real-time resource availability information to the IoT cloud platform 102 via the Internet based on the computed real-time resources. At step 412, the IoT cloud platform 102 determines whether the real-time resources available on the edge device 104A are equal to or greater than the minimum resources required for executing the software application on the edge device 104A.

If the real-time resources available are equal to or greater than the minimum resources required, then at step 414, the IoT cloud platform 102 provisions the software application on the edge device 104A. At step 416, the edge device 104A installs the software application provisioned by the IoT cloud platform 102.

If the real-time resources available are less than the minimum resources required, then at step 418, the IoT cloud platform 102 customizes the software application in such a manner that the resources required for executing the software application are within the real-time resources available on the edge device 104A. For example, the IoT cloud platform 102 provides a data scientist with the real-time resources available at the edge
expensive (e.g. K-Nearest Neighbor device 104A. Accordingly, the data scientist customizes the software application in such a manner that minimal resources required are less than or equal to the real-time resources available at the edge device 104A.

For example, the data scientist may customize the software application by adjusting data sampling or throughput to lower computational and memory requirements required for executing the software application. Alternatively, the data scientist may choose an algorithm that is less computationally instead of a complex Neural Network). Also, the data scientist may split the software application into different parts which can be installed and executed on multiple edge devices in a synchronized manner. Alternatively, the IoT cloud platform 102 automatically customizes the software application to meet the real-time resources available based on artificial intelligence methods. At step 420, the IoT cloud platform 102 provisions the customized software application on the edge device 104A. At step 422, the edge device 104A installs the customized software application provisioned by the IoT cloud platform 102.

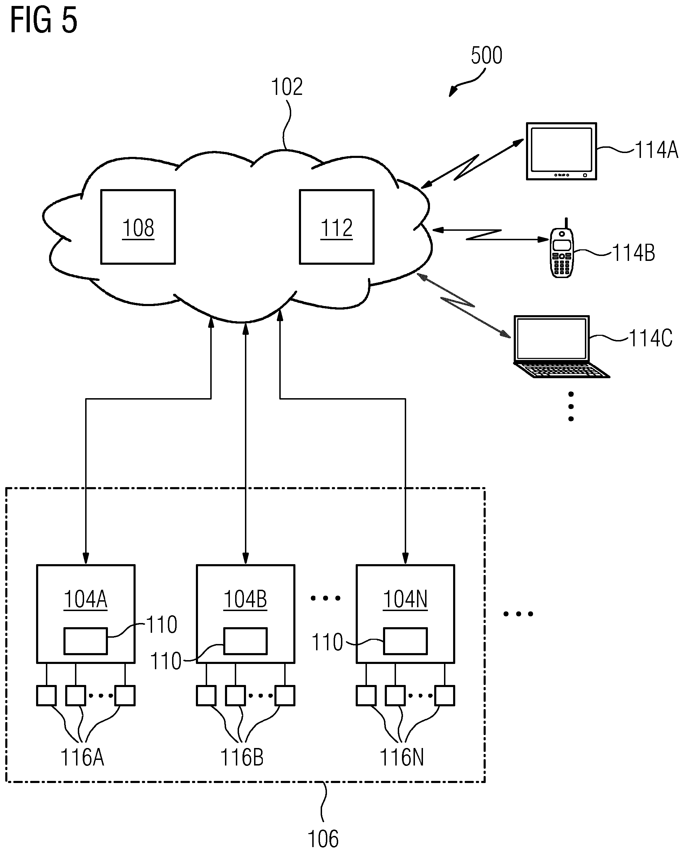

FIG 5 is a schematic representation of an IoT environment 500, according to a second embodiment of the present invention. It can be seen from FIG 5 that the IoT environment 500 is similar to the IoT environment 100 of FIG 1 except that the edge device management module 110 resides in the edge devices 104A-N instead of the IoT cloud platform 102. The operational details of the edge devices 104A-N comprising the edge device management module 110 is described in greater detail below.

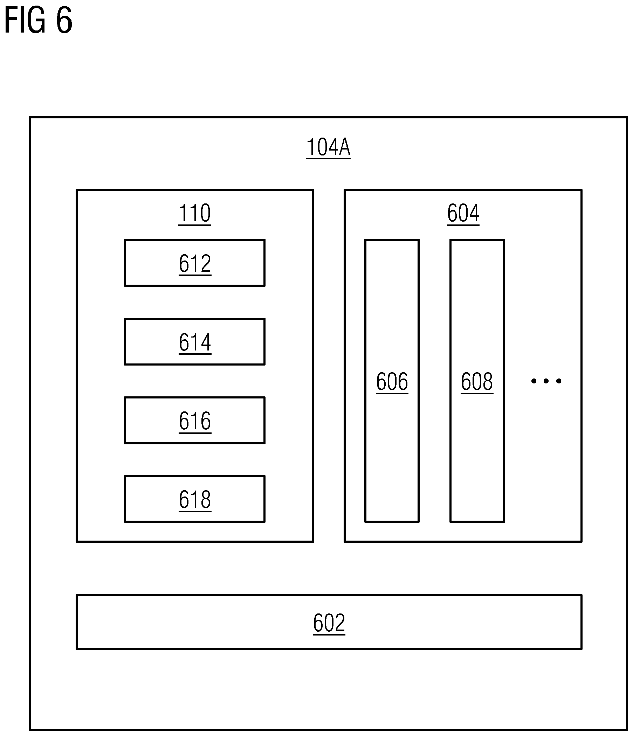

FIG 6 is a block diagram of an exemplary edge device 104A in the IoT environment 500, according to the second embodiment of the present invention. The edge device 104A comprises an edge operating system 602, an application runtime 604, and an edge device management module 110.

The edge operating system 602 is an embedded real-time operating system (OS) such as the Linux^{™} operating system. The edge operating system 602 enables communication with the sensors and actuators 116A and with the IoT cloud platform 102. The edge operating system 602 also allows running one or more software applications 606, 608 deployed in the edge device 104A. The application runtime 604 is a layer on which the one or more software applications 606, 608 are installed and executed in real-time. The software applications 606, 608 are installed for processing plant data collected from the sensors and actuators 116A.

The edge management module 110 comprises an application management module 612, a resource management module 614, a connectivity management module 616, and a data management module 618. The application management module 612 is configured for receiving, deploying, updating and managing the software applications 606, 608 on the edge device 104A. The resource management module 614 is configured for evaluating real-time resource capabilities for hosting and executing a new software application on the edge device 104A. In some embodiments, the resource management module 614 computes real-time resources available for hosting and executing the new software application based on a request from the IoT cloud platform 102. For example, the resource management module 614 makes calls to the edge operating system 602 to determine real-time availability of resources on the edge device 104A. The resource management module 614 determines net available resources after considering resources consumed by the software applications 606, 608 in the application runtime 604. In these embodiments, the resource management module 614 determines whether the real-time resources available are sufficient for hosting and executing the software application being provisioned based on a resource requirement specification received from the IoT cloud platform 102. The resource requirement specification 102 indicates minimal resources required for executing the software application on the edge device 104A. Additionally, the resource management module 614 monitors resources on the edge device 104A.

The connectivity management module 616 is configured to manage connections with the IoT cloud platform 102 and the sensors and actuators 116A and other edge devices 104B-N in the IoT environment 500. The data management module 618 is configured to buffer, save and manage the plant data collected from the sensors and actuators 116A.

Although not illustrated in FIG 6, one would understand that the edge device 104A may also comprise a processor, memory coupled to the processor, power modules, communication interfaces, etc.

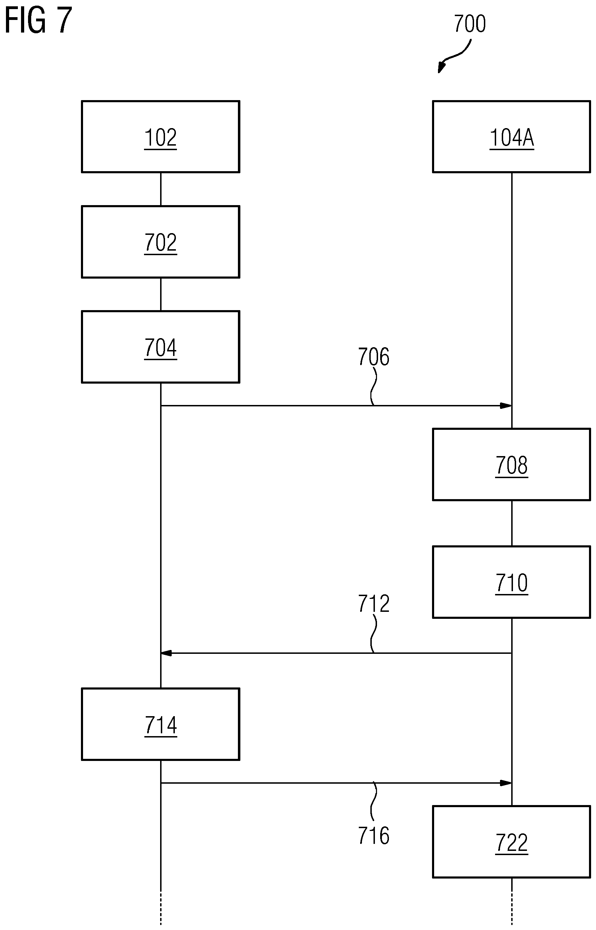

FIG 7 is a flow diagram 700 illustrating an exemplary method of smart provisioning a software application on the edge device 104A by the IoT cloud platform 102, according to the second embodiment of the present invention. At step 702, the IoT cloud platform 102 detects an event associated with provisioning a software application on the edge device 104A. At step 704, the IoT cloud platform 102 obtains a resource requirement specification associated with the software application from the application repository 112. At step 706, the IoT cloud platform 102 sends a request to provide real-time resource availability information to the edge device 104A. The request comprises the resource requirement specification associated with the software application. The resource requirement specification indicates minimal resources required for executing the software application on the edge device 104A.

At step 708, the edge device 104A computes real-time resources available for executing the software application. At step 710, the edge device 104A evaluates the real-time resources available for executing the software application based on the resource requirement specification. The edge device 104A evaluates whether the real-time resources available are equal to or greater than the minimal resources required for executing the software application.

At step 712, the edge device 104A sends results of the evaluation of the available real-time resource to the IoT cloud platform 102 via the Internet. In some embodiments, the evaluation results may be displayed on one of the user devices 114A-C via the cloud user interface. At step 714, the IoT cloud platform 102 determines whether the real-time resources available on the edge device 104A are sufficient for executing the software application based on the results of evaluation. If the real-time resources available are sufficient, then at step 716, the IoT cloud platform 102 provisions the software application on the edge device 104A. For example, the IoT cloud platform 102 pushes corresponding application binary to the edge device 104A. At step 718, the edge device 104A deploys the software application provisioned by the IoT cloud platform 102 in the application runtime 604.

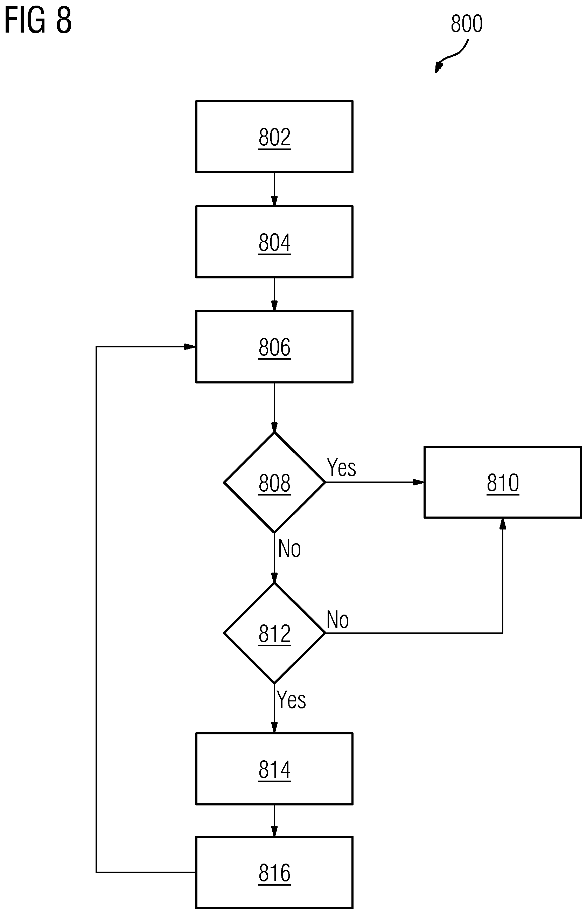

FIG 8 is a process flowchart illustrating another exemplary method of computing real-time resources available for executing a software application on the edge device 104A prior to provisioning the application, according to the second embodiment of the present invention. At step 802, a request to evaluate real-time resources available for executing the software application is received from the IoT cloud platform 102 by the edge device 104A. The request comprises a resource requirement specification associated with the software application.

At step 804, real-time resources available for executing the software application if provisioned by the IoT cloud platform 102 are computed. The real-time resources available may include hardware resources as well as software resources. The real-time resources available may include resources which are currently not utilized by the software applications running on the edge device 104A. The real-time resources available may also mean hardware and software specification of the edge device 104A. In an exemplary implementation, the real-time resources available may be computed by subtracting resources utilized from total amount of resources originally present on the edge device 104A.

At step 806, the real-time resources available for executing the software application are compared with the minimal resources required for smooth execution of the software application. At step 808, it is determined whether the real-time resource available on the edge device 104A are equal to or greater than the minimal resources required for smooth execution of the software application on the edge device 104A. If the real-time resources are equal to or greater than the minimal resources, then at step 810, evaluation results indicating that the real-time resources available on the edge device 104A are sufficient for executing the software application are sent to the IoT cloud platform 102 via the Internet. Accordingly, the IoT cloud platform 102 pushes application binary corresponding to the software application on the edge device 104A.

If the real-time resources available are less than the minimal resources required, then at step 812, it is determined whether one or more resources can be freed up for deploying the software application on the edge device 104A. If none of the utilized resources can be freed-up, then at step 810, results of evaluation indicating that the real-time resources available on the edge device 104A are insufficient for executing the software application are sent to the IoT cloud platform 102 via the Internet. If one or more resources can be freed up, then at step 814, the one or more resources are freed up to deploy the software application. The resources on the edge device 104A are freed up by stopping execution of one or more software applications 606, 608 having lower priority than the software application to be provisioned. Alternatively, the resources on the edge device 104A are freed up by uninstalling one or more software applications 606, 608 having least priority than the software application to be provisioned. At step 816, real-time resources available at the edge device 104A for executing the software application is recomputed. The process 800 is directed to step 806 and repeats the steps 806 to 816.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A method of provisioning a software application on edge devices (104A-N) in an Internet-of-Things (IoT) environment (100, 500), comprising:
detecting an event associated with provisioning a software application on at least one edge device (104A), wherein said edge device (104A) is communicatively coupled to an IoT cloud platform (102);
evaluating real-time resource capabilities of said edge device (104A) to execute the software application based on a resource requirement specification associated with the software application in response to the detected event;
provisioning the software application on said edge device (104A) based on evaluation of the real-time resource capabilities of said edge device (104A).

2. The method according to claim 1, wherein evaluating the real-time resource capabilities of said edge device (104A) to execute the software application, comprises:
obtaining the resource requirement specification associated with the software application from an application repository (112), wherein the resource requirement specification indicates minimum resources required for executing the software application on said edge device (104A) in real-time;
obtaining real-time resource availability information associated with said edge device (104A), wherein the real-time resource availability information indicates real-time resources available on said edge device (104A) for executing the software application; and
determining whether the real-time resources available on said edge device (104A) are equal to or greater than the minimum resources required for executing the software application on said edge device (104A).

3. The method according to claim 2, wherein provisioning the software application on said edge device (104A) comprises:
provisioning the software application on said edge device (104A) if the real-time resources available on said edge device (104A) are equal to or greater than the minimum resources required for executing the software application on said edge device (104A).

4. The method according to claim 2, wherein provisioning the software application on said edge device (104A) comprises:
determining whether one or more resources can be freed-up for provisioning the software application if the real-time resources available on said edge device (104A) are less than the minimum resources required for executing the software application;
releasing the one or more resources on said edge device (104A); and
deploying the software application on said edge device (104A).

5. The method according to claim 2 or 4, wherein provisioning the software application on said edge device (104A) comprises:
customizing the software application to meet the real-time resources available on said edge device (104A); and
provisioning the customized software application on said edge device (104A).

6. The method according to claims 1 to 5, wherein the software application is an application for performing data analytics on said edge device (104A).

7. A system (102) for provisioning software applications on edge devices (104A-N) in an Internet-of-Things (IoT) environment (100, 500), comprising:
one or more processors (202);
a memory (204) coupled to the processors (202), wherein the memory comprises an application repository (112) having software applications stored therein;
an edge device management module (110); and
a provisioning module (108), wherein the edge device management module (110) is configured for:
detecting an event associated with provisioning a software application on at least one edge device (104A); and
evaluating real-time resource capabilities of said edge device (104A) to execute the software application based on a resource requirement specification associated with the software application in response to the detected event; and wherein the provisioning module (108) is configured for:
provisioning the software application from the application repository (112) on said edge device (104A) based on the outcome of evaluation of the real-time resource capabilities of said edge device (104A).

8. The system (102) according to claim 7, wherein in evaluating real-time resource capabilities of said edge device (104A), the edge device management module (110) is configured for:
obtaining the resource requirement specification associated with the software application from the application repository (112), wherein the resource requirement specification indicates minimum resources required for executing the software application on said edge device (104A) in real-time;
obtaining real-time resource availability information associated with said edge device (104A), wherein the real-time resource availability information indicates real-time resources available on said edge device (104A) for executing the software application; and
determining whether the real-time resources available on said edge device (104A) are equal to or greater than the minimum resources required for executing the software application on said edge device (104A).

9. The system (102) according to claim 8, wherein in provisioning the software application on said edge device (104A), the provisioning module (108) is configured for:
provisioning the software application on said edge device (104A) if the real-time resources available on said edge device (104A) are equal to or greater than the minimum resources required for executing the software application on said edge device (104A).

10. The system (102) according to claim 8, wherein in provisioning the software application on said edge device (104A), the provisioning module (108) is configured for:
customizing the software application to meet the real-time resources capabilities on said edge device (104A); and
provisioning the customized software application on said edge device (104A).

11. An edge device (104A) in an Internet-of-Things (IoT) environment (500), comprising:
an edge operating system (602); and
an edge device management module (110), wherein the edge device management module (110) is configured for:
receiving a request to evaluate real-time resource capabilities for executing a software application from an IoT cloud platform (102), wherein the request comprises a resource requirement specification associated with the software application;
evaluating real-time resource capabilities to execute the software application based on the resource requirement specification associated with the software application;
transmitting results of evaluation of the real-time resource capabilities to execute the software application to the IoT cloud platform (102);
receiving the software application from the IoT cloud platform (102) if the outcome of the evaluation indicates availability of sufficient real-time resource capabilities to execute the software application; and
installing the software application received from the IoT cloud platform (102).

12. Said edge device (104A) of claim 11, wherein the resource requirement specification indicates minimum resources required for executing the software application in real-time.

13. Said edge device (104A) according to claim 11 or 12, wherein in evaluating real-time resource capabilities, the edge device management module (110) is configured for:
computing real-time resources available for executing the software application; and
determining whether the real-time resources available for executing the software application are equal to or greater than the minimum resources required for executing the software application.

14. Said edge device (104A) according to claim 13, wherein in evaluating real-time resource capabilities, the edge device management module (110) is configured for:
determining whether one or more resources can be freed-up for executing the software application if the real-time resources available are less than the minimum resources required for executing the software application;
releasing the one or more resources in order to ensure that the sufficient real-time resources are available for executing the software application.

15. A computer-program product, having machine-readable instructions stored therein, that when executed by a processor (202), cause the processor (202) to perform method steps according to any of the claims 1-5.

## Amended claims

### Amended claims in accordance with Rule 137(2) EPC.

1. A method of provisioning a software application on edge devices (104A-N) in an Internet-of-Things (IoT) environment (100, 500), comprising:
detecting an event associated with provisioning a software application on at least one edge device (104A), wherein said edge device (104A) is communicatively coupled to an IoT-cloud platform (102);
evaluating real-time resource capabilities of said edge device (104A) to execute the software application based on a resource requirement specification associated with the software application in response to the detected event, wherein the real-time resource capabilities are based on real-time resources available on said edge device (104A) for executing the software application, and wherein the resource requirement specification indicates minimum resources required for executing the software application on said edge device (104A) in real-time;
provisioning the software application on said edge device (104A) if the real-time resources available on said edge device (104A) are equal to or greater than the minimum resources required for executing the software application on said edge device (104A).

2. The method according to claim 1, wherein evaluating the real-time resource capabilities of said edge device (104A) to execute the software application, comprises:
obtaining the resource requirement specification associated with the software application from an application repository (112);
obtaining real-time resource availability information associated with said edge device (104A), wherein the real-time resource availability information indicates the real-time resources available on said edge device (104A) for executing the software application; and
determining whether the real-time resources available on said edge device (104A) are equal to or greater than the minimum resources required for executing the software application on said edge device (104A).

3. The method according to claim 2, wherein provisioning the software application on said edge device (104A) comprises:
determining whether one or more resources can be freed-up for provisioning the software application if the real-time resources available on said edge device (104A) are less than the minimum resources required for executing the software application;
releasing the one or more resources on said edge device (104A); and
deploying the software application on said edge device (104A).

4. The method according to claim 2 or 3, wherein provisioning the software application on said edge device (104A) comprises:
customizing the software application to meet the real-time resources available on said edge device (104A); and
provisioning the customized software application on said edge device (104A).

5. The method according to claims 1 to 4, wherein the software application is an application for performing data analytics on said edge device (104A).

6. A system (102) for provisioning software applications on edge devices (104A-N) in an Internet-of-Things (IoT) environment (100, 500), comprising:
one or more processors (202);
a memory (204) coupled to the processors (202), wherein the memory comprises an application repository (112) having software applications stored therein;
an edge device management module (110); and
a provisioning module (108), wherein the edge device management module (110) is configured for:
detecting an event associated with provisioning a software application on at least one edge device (104A); and
evaluating real-time resource capabilities of said edge device (104A) to execute the software application based on a resource requirement specification associated with the software application in response to the detected event, wherein the real-time resource capabilities are based on real-time resources available on said edge device (104A) for executing the software application, and wherein the resource requirement specification indicates minimum resources required for executing the software application on said edge device (104A) in real-time; and wherein the provisioning module (108) is configured for:
provisioning the software application from the application repository (112) on said edge device (104A) if the real-time resources available on said edge device (104A) are equal to or greater than the minimum resources required for executing the software application on said edge device (104A).

7. The system (102) according to claim 6, wherein in evaluating real-time resource capabilities of said edge device (104A), the edge device management module (110) is configured for:
obtaining the resource requirement specification associated with the software application from the application repository (112);
obtaining real-time resource availability information associated with said edge device (104A), wherein the real-time resource availability information indicates the real-time resources available on said edge device (104A) for executing the software application; and
determining whether the real-time resources available on said edge device (104A) are equal to or greater than the minimum resources required for executing the software application on said edge device (104A).

8. The system (102) according to claim 6, wherein in provisioning the software application on said edge device (104A), the provisioning module (108) is configured for:
customizing the software application to meet the real-time resources capabilities on said edge device (104A); and
provisioning the customized software application on said edge device (104A).

9. An edge device (104A) in an Internet-of-Things (IoT) environment (500), comprising:
an edge operating system (602); and
an edge device management module (110), wherein the edge device management module (110) is configured for:
receiving a request to evaluate real-time resource capabilities for executing a software application from an IoT cloud platform (102), wherein the request comprises a resource requirement specification associated with the software application;
evaluating real-time resource capabilities to execute the software application based on the resource requirement specification associated with the software application;
transmitting results of evaluation of the real-time resource capabilities to execute the software application to the IoT cloud platform (102);
receiving the software application from the IoT cloud platform (102) if the outcome of the evaluation indicates availability of sufficient real-time resource capabilities to execute the software application; and
installing the software application received from the IoT cloud platform (102).

10. The edge device (104A) of claim 9, wherein the resource requirement specification indicates minimum resources required for executing the software application in real-time.

11. The edge device (104A) according to claim 9 or 10, wherein in evaluating real-time resource capabilities, the edge device management module (110) is configured for:
computing real-time resources available for executing the software application; and
determining whether the real-time resources available for executing the software application are equal to or greater than the minimum resources required for executing the software application.

12. The edge device (104A) according to claim 11, wherein in evaluating real-time resource capabilities, the edge device management module (110) is configured for:
determining whether one or more resources can be freed-up for executing the software application if the real-time resources available are less than the minimum resources required for executing the software application;
releasing the one or more resources in order to ensure that the sufficient real-time resources are available for executing the software application.

13. A computer-program product, having machine-readable instructions stored therein, that when executed by a processor (202), cause the processor (202) to perform method steps according to any of the claims 1-5.
